# FASCICULE DE BREVET EUROPEEN

(11) **EP 2 008 483 B1**
(45) Date de publication et mention de la délivrance du brevet: **04.03.2020**
(21) Numéro de dépôt: 07731916.8
(22) Date de dépôt: 19.04.2007
(51) Int. Cl.: H04W 12/06, H04W 4/00, H04W 88/02

(54) **PROCÉDÉ DE SÉCURISATION DE L'ACCÈS À UN MODULE DE COMMUNICATION DE PROXIMITÉ DANS UN TERMINAL MOBILE**
VERFAHREN FÜR DEN SICHEREN ZUGRIFF AUF EIN PROXIMITÄTSKOMMUNIKATIONSMODUL IN EINEM MOBILEN ENDGERÄT
METHOD OF SECURING ACCESS TO A PROXIMITY COMMUNICATION MODULE IN A MOBILE TERMINAL

(30) Priorité: 19.04.2006 FR 0651371
(43) Date de publication de la demande: 31.12.2008
(73) Titulaire: Orange, 75015 Paris (FR)
(72) Inventeur: MOREL, Thierry, F-14930 Eterville (FR); BOUDET, François, F-14190 Fierville Bray (FR); KERDRAON, Alan, F-14000 Caen (FR)
(74) Mandataire: Cabinet Beau de Loménie
(86) Numéro de dépôt international: PCT/FR2007/051141
(87) Numéro de publication internationale: WO 2007/119032

(56) Documents cités:
- EP-A- 1 379 093
- WO-A-03/081934
- WO-A-2005/079038
- US-A- 5 898 783
- JUAN CARLOS LOPEZ CALVET: "The role of RFID in the mobile phone" TELEKTRONIKK, [Online] no. 3, avril 2005 (2005-04), pages 131-142, XP002417982 Norway Extrait de l'Internet: URL:http://www.telenor.com/telektronikk/vo lumes/pdf/3_4.2005/Page_131-142.pdf> [extrait le 2007-02-01]

## Description

### Domaine de l'invention

La présente invention se rapporte au domaine des télécommunications mobiles longues et courtes distances ainsi qu'au domaine du paiement électronique et du contrôle d'accès réalisés par des dispositifs de type carte sans contact. Elle concerne plus particulièrement les terminaux mobiles équipés d'un module de communication de proximité sans contact réalisant certaines fonctions de sécurité et des communications très courtes distances de type "communication en champ proche" connu sous l'acronyme NFC (pour "Near Field Communication").

### Art antérieur

Un téléphone mobile est composé de plusieurs éléments dédiés aux différentes fonctions offertes à l'utilisateur. Les principaux sont aujourd'hui:
- un clavier qui permet à l'utilisateur de communiquer des données à son téléphone;
- un écran qui permet au téléphone de communiquer avec l'utilisateur;
- un micro et un haut-parleur assurant la communication vocale;
- un élément de radiocommunication (par exemple de type GSM) qui permet la communication longue distance sur le réseau des opérateurs de télécommunication;
- une mémoire permettant le stockage de données propres au fonctionnement du téléphone ou personnelles à l'utilisateur;
- une carte à puce d'abonné (par exemple carte SIM ou USIM), propriété de l'opérateur de télécommunication auquel est abonné l'utilisateur, et qui dispose de fonctions cryptographiques permettant notamment une authentification réciproque avec le réseau;
- différents périphériques de type "appareil photo", ou ports de communication de type Bluetooth™,Irda™, Wifi™...
- un système d'exploitation (par exemple Windows Mobile™) et l'électronique associée (moyens de traitement) chargés de gérer l'ensemble des éléments de l'appareil mobile et d'assurer la communication entre ces différents éléments.
- Eventuellement une carte mémoire amovible ou MMC ("Multimedia Memory Card") dont le format varie en fonction du terminal (SD, miniSD...)

Certains téléphones mobiles ont été récemment dotés d'un module de communication de proximité de type carte à puce sans contact de la famille ISO 14443. Ce module correspond à une puce sans contact qui est intégrée au téléphone mobile sous forme d'un ensemble de composants dont l'un assure les fonctions de composant de sécurité (secrets nécessaires à une transaction sans contact, authentification, chiffrement, signature...), par exemple le circuit Smart MX de la société Philips™. Il est à noter que tout ou partie de cette puce (notamment le composant de sécurité NFC) peut également être intégrée sur une carte mémoire amovible si le téléphone en dispose. La puce sans contact utilise la technologie NFC ("Near Field Communication") ou ISO 14443.

Les puces NFC sont munies d'une antenne et d'un circuit électronique et permettent, pour les plus évoluées, de transmettre, recevoir et traiter de l'information à travers l'antenne également utilisée pour transmettre l'énergie nécessaire à la puce. Les puces NFC comprennent un composant de sécurité apte à stocker des données, à en contrôler l'accès et la diffusion et à effectuer des fonctions algorithmiques (identification/authentification, cryptage, signature). Pour permettre un temps de réponse très court (moins de 300 ms voir 140 ms), il est nécessaire que la puce NFC, qui traite les données échangées sur le canal radiofréquence très courte distance, soit en liaison directe avec l'antenne chargée des échanges.

Un téléphone mobile doté d'une puce NFC permet de réaliser un certain nombre d'opérations comme notamment des paiements électroniques sécurisés, ouverture de portes ou barrières, ou encore de faciliter le téléchargement de contenus multimédias (chansons, vidéos, etc.). Pour réaliser ces opérations, l'utilisateur approche son téléphone mobile doté d'une puce NFC d'un lecteur de puce NFC associé à l'appareil correspondant (terminal de paiement, borne d'accès, etc.).

Pour permettre à l'utilisateur de consulter/gérer certaines données stockées dans la puce NFC (comme par exemple pour afficher sur l'écran du téléphone certaines informations contenues dans la puce NFC telles que le nombre de tickets de paiement restants ou pour activer/désactiver une fonction particulière), des applications embarquées sur le téléphone mobile doivent pouvoir récupérer des informations qui sont stockées dans le composant de sécurité de la puce NFC.

Comme pour tout élément de sécurité, certaines informations stockées dans la puce NFC sont protégées et ne peuvent être lues ou modifiées qu'après authentification (par exemple en utilisant un algorithme de cryptage "triple DES"). Pour effectuer cette authentification, il est nécessaire de disposer de données de secret (par exemple des clés de cryptage/décryptage) et de moyens de calcul capables d'effectuer rapidement un calcul cryptographique pouvant être complexe.

Les données de secret nécessaires à l'authentification auprès du composant de sécurité de la puce NFC sont stockées dans la mémoire du téléphone mobile. En stockant ces données de secret et en effectuant ces calculs dans le téléphone mobile (par exemple au moyen d'une l'application Midlet Java® avec clés en RMS ("Right Management System") on perd le bénéfice d'une sécurisation par authentification du porteur.

En effet, un téléphone mobile déclaré comme volé peut être neutralisé au niveau de sa carte à puce d'abonné qui est bloquée par l'opérateur. Cependant, le téléphone mobile pourra tout de même être utilisé pour des communications de très courtes distances avec la puce NFC (utilisation en "contactless") simplement en insérant une autre carte à puce d'abonné non bloquée dans celui-ci.

Le niveau de sécurité et de contrôle de la puce NFC doit, par conséquent, être amélioré pour garantir à l'utilisateur une meilleure protection en cas de vol ou de perte de son téléphone mobile.

Les documents WO 2005/079038 et WO 03/081934 décrivent un terminal mobile équipé d'un module de communication de proximité dont l'utilisation peut être soumise à une authentification préalable, cette authentification pouvant être réalisée aux moyens de données enregistrées dans la carte SIM du terminal mobile.

Le document EP 1 379 093 décrit un terminal mobile dans lequel un mot de passe est enregistré à la fois dans la mémoire du terminal et dans la carte SIM embarquée dans ce dernier. Ce document ne mentionne pas que le terminal mobile peut être équipé d'un module de communication de proximité.

### Objet et description succincte de l'invention

Pour pallier ces inconvénients, la présente invention propose une solution qui permet un meilleur contrôle de la sécurisation de l'accès aux données de la puce NFC, et par conséquent, de l'utilisation du module de communication de proximité notamment en cas de perte ou de vol du terminal.

A cet effet, l'invention propose un procédé de sécurisation de l'accès à un module de communication de proximité tel que défini dans la revendication 1.

Ainsi, en stockant les données de sécurité nécessaires à l'authentification par le module de communication de proximité dans le dispositif de sécurité, on améliore grandement le niveau de sécurité et de contrôle sur le module de communication de proximité. En effet, en bloquant l'accès aux données de sécurité enregistrées dans le dispositif de sécurité, par exemple à la suite d'un vol ou d'une perte du terminal, on empêche l'authentification du dispositif de sécurité par le module de communication de proximité. De cette manière, toutes les actions réalisées avec le module de communication de proximité (par exemple consultation/modification données du composant de sécurité) nécessitant une authentification du dispositif de sécurité par ce dernier peuvent être interdites.

Les données de sécurité enregistrées dans le dispositif de sécurité embarqué sur le terminal peuvent comprendre notamment un ou plusieurs codes confidentiels, éventuellement enregistrés sous forme protégée (par exemple cryptée), et/ou une ou plusieurs clés de cryptographie. Ainsi, il est possible de choisir le niveau d'authentification (simple ou fort) en fonction des données enregistrées dans le dispositif de sécurité.

Lors d'une authentification simple, le système d'exploitation du terminal transmet au composant de sécurité du module de communication de proximité au moins un code confidentiel enregistré dans le dispositif de sécurité, chaque code confidentiel transmis étant comparé avec un code préenregistré dans le composant de sécurité du module de communication de proximité.

Lors d'une authentification plus sophistiquée (authentification forte), les données de sécurité dans le dispositif de sécurité peuvent correspondre à au moins une clé de cryptographie ainsi qu'à des programmes de calculs cryptographiques de manière à ce que le dispositif de sécurité réalise une signature électronique au moyen de la clé de cryptographie en réponse à une requête d'authentification émise par le composant de sécurité du module de communication de proximité. Cette signature est alors retournée par le système d'exploitation au composant de sécurité pour vérification.

L'invention concerne également un dispositif de sécurité tel que défini dans la revendication 8.

Avec un tel dispositif de sécurité, l'opérateur de télécommunication peut en outre contrôler l'utilisation du module de communication de proximité. En effet, en bloquant à distance l'accès aux données de sécurité du dispositif de sécurité nécessaires lors d'une authentification par le module de communication de proximité, on interdit toutes les actions réalisées avec le module de communication de proximité nécessitant une authentification.

L'invention concerne encore un programme d'ordinateur destiné à être exécuté par des moyens de traitement d'un dispositif de sécurité selon la revendication 11.

La présente invention concerne enfin un terminal équipé d'un module de communication de proximité comprenant un composant de sécurité relié à des moyens de communication sans fil et d'un dispositif de sécurité tels que décrits précédemment.

Comme expliqué plus haut, un tel terminal présente un niveau de sécurité accru vis-à-vis du module de communication de proximité embarqué.

### Brève description des dessins

Les caractéristiques et avantages de la présente invention ressortiront mieux de la description suivante, faite à titre indicatif et non limitatif, en regard des dessins annexés sur lesquels :
- la figure 1 est une vue schématique de l'architecture fonctionnelle dans laquelle est mis en oeuvre le procédé de sécurisation d'accès à un module de communication de proximité selon l'invention,
- la figure 2 est un ordinogramme d'un mode de mise en œuvre d'une opération d'authentification conformément à un mode de réalisation de l'invention.

### Description détaillée des modes de réalisation de l'invention

La présente invention s'applique à tout type de terminal notamment mobile (téléphone mobile, PDA communiquant, Smart phone etc.) fonctionnant avec un dispositif de sécurité et doté d'un module de communication de proximité permettant une communication sans fil qui peut être de type transmission radiofréquence courte distance ou très courte distance, ou encore de type transmission infrarouge, etc. Dans la suite de la description le module de communication de proximité permet une communication de type transmission radiofréquence très courte distance.

Le dispositif de sécurité considéré dans la présente invention correspond à tout type de dispositif de sécurité utilisé dans un terminal de télécommunication pour permettre à l'utilisateur d'accéder à un réseau de télécommunication mobile et qui peut être bloqué à distance (par exemple par l'opérateur de téléphonie mobile) via le réseau de télécommunication. Parmi les dispositifs de sécurité utilisés dans de tels terminaux, un des plus connus est la carte à puce d'abonné ("Smart Card" contenant des moyens de traitement (microcontrôleur) et des moyens de mémorisation), connue sous le nom de carte SIM (pour "Subscriber Identity Module") ou carte USIM (pour "Universal Subscriber Identity Module" encore appelée carte UICC pour "UMTS Integrated Circuit Card").

Dans la suite de la description, le dispositif de sécurité apte à être bloqué à distance sera décrit en relation avec une carte à puce d'abonné de type carte SIM.

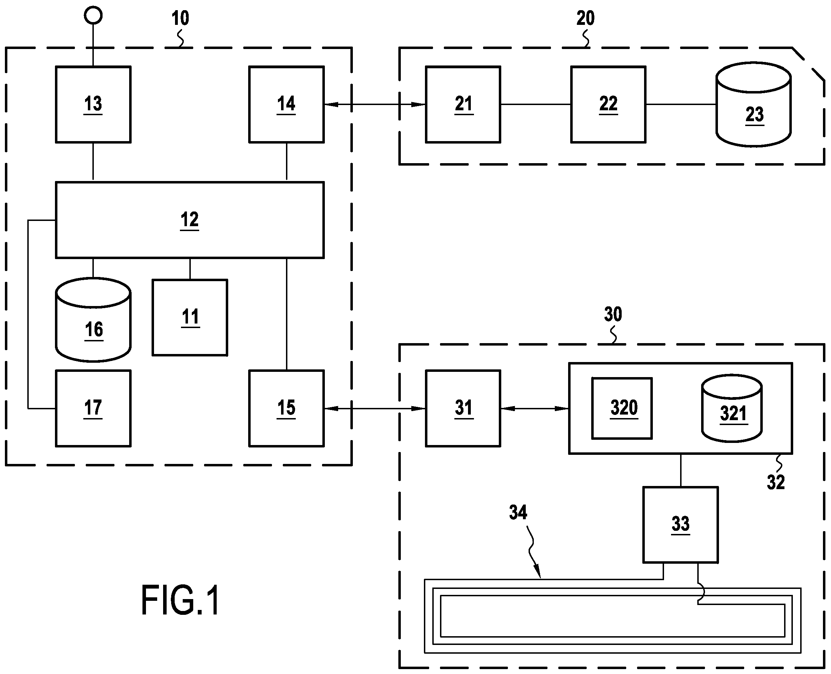

La figure 1 illustre une architecture fonctionnelle dans laquelle l'invention peut être mise en œuvre. Cette architecture comprend un téléphone mobile 10, une carte à puce d'abonné 20 et un module de communication de proximité NFC 30.

Le téléphone mobile 10 comprend une interface utilisateur 11 (clavier, écran, micro, haut-parleur), un système d'exploitation 12, une interface réseau d'accès 13 (par exemple réseau GSM, GPRS ou UMTS), une interface de communication 14 avec la carte à puce d'abonné 20, une interface de communication 15 avec le module de communication de proximité NFC, une unité de mémoire 16. Le système d'exploitation 12 est un programme informatique qui permet de gérer les différentes fonctions du terminal mobile ainsi que l'interaction entre les éléments du terminal (par exemple clavier, écran, carte à puce d'abonné, etc.). Conformément à l'invention, le système d'exploitation 12 gère en outre les échanges entre la carte à puce d'abonné et le module de communication de proximité NFC.

La carte à puce d'abonné 20 est un dispositif de sécurité propriété de l'opérateur de télécommunication (par exemple Orange™) auquel est abonné l'utilisateur du téléphone mobile. Cette carte à puce est nécessaire pour le fonctionnement du téléphone. Une telle carte à puce est, par exemple, une carte SIM (pour "Subscriber Identity Module") ou une carte USIM (pour "Universal Subscriber Identity Module") encore appelée carte UICC (pour "UMTS Integrated Circuit Card"). Cette carte permet, entre autre, l'authentification de l'abonné sur un réseau mobile de télécommunication et l'accès à des services à valeur ajoutée tels que la messagerie, le suivi de la consommation, le service client, etc..

La carte à puce d'abonné comprend une interface de communication 21, des moyens de traitement 22 (par exemple microprocesseur programmable) et une mémoire de stockage 23. Conformément à l'invention, la mémoire de stockage 23 est utilisée pour mémoriser, en outre des données habituellement stockées, les données de sécurité nécessaires à l'authentification de la carte à puce d'abonné par le composant de sécurité du module de communication de proximité. Comme décrit plus loin en détail, la mémoire de stockage 23 peut mémoriser des données de sécurité du type code confidentiel et du type clé de cryptographie. Un ou plusieurs programmes de calculs cryptographiques peuvent être en outre enregistrés dans la mémoire 23 ou dans une autre mémoire comme par exemple celle du terminal et être exécutés par les moyens de traitement 22 lors d'une authentification. Les moyens de traitement 22 sont spécifiquement programmés pour répondre à une requête d'authentification émise par le composant de sécurité du module de communication de proximité en renvoyant, par exemple, un code confidentiel stocké dans la mémoire 23 ou en réalisant des fonctions de cryptage/décryptage au moyen de la ou des clés de cryptographie mémorisées dans la carte à puce d'abonné et des programmes de calculs cryptographiques.

Le téléphone mobile 10 et le dispositif de sécurité 20 communiquent via les interfaces 14, 21. Cette interface est normalisée par l'ETSI (Institut Européen des Normes de Télécommunication) et son accès via des API (interfaces applicatives) est aussi normalisée par la recommandation JSR177 définie par le Java™ Forum.

Le module de communication de proximité NFC 30 comprend une interface de communication 31 avec le téléphone mobile, un composant de sécurité 32, un circuit analogique NFC 33 et une antenne 34 formée par une série de spires. Le composant de sécurité 32 est du type circuit de carte à puce et comprend une mémoire de stockage 321 et des moyens de traitement 320 (par exemple microprocesseur programmable) spécifiquement programmés pour réaliser notamment des fonctions de sécurisation d'échange d'informations numériques telles que des fonctions de cryptographie, de vérification de code confidentiel, de vérification signature électronique, etc.

Le circuit analogique NFC 33 comprend des composants analogiques qui permettent de façon connue d'envoyer/recevoir les données numériques contenues ou générées par le composant de sécurité 32 via l'antenne 34. Le circuit analogique NFC 33 comprend également des composants analogiques (par exemple un condensateur) aptes à emmagasiner de l'énergie reçue à travers des ondes électromagnétiques émises depuis l'appareil de lecture de puce NFC et à fournir cette énergie au composant de sécurité 32 pour permettre son fonctionnement.

Le module de communication de proximité NFC 30 peut être embarqué dans le terminal sous différentes formes. Il peut être embarqué sous la forme d'un circuit électronique intégré au terminal. Il peut également être embarqué en tout ou partie sous la forme d'une carte mémoire amovible telle qu'une carte MMC ("Multimedia Memory Card") dont le format varie en fonction du type de terminal (par exemple carte mémoire format SD ou miniSD).

La structure et le fonctionnement du module de communication de proximité NFC est similaire à celui des étiquettes RFID bien connues. La technologie NFC permet à l'utilisateur d'accéder à des services sans fil ou à échanger de l'information rien qu'en approchant son terminal mobile d'autres appareils compatibles NFC (c'est-à-dire équipés de lecteur NFC), comme des bornes interactives par exemple. La technologie NFC se distingue par sa vitesse de transmission élevée (plus de 200 Kbit/s) et son faible coût.

Le téléphone mobile 10 et le module de communication de proximité NFC 30 communiquent via les interfaces 15, 31. Cette interface est en cours de normalisation par la recommandation JSR257 définie par le Java™ Forum.

La carte à puce d'abonné 20 peut être bloquée (c'est-à-dire neutralisée) à distance via le réseau de télécommunication. Le blocage à distance peut concerner soit l'accès au réseau de télécommunication, soit l'accès aux données de sécurité enregistrées dans la carte à puce d'abonné 20, soit les deux. Le blocage à distance d'une carte à puce d'abonné pour empêcher l'accès au réseau de télécommunication est bien connu en soi et ne sera pas décrit ici plus en détail.

Le blocage à distance de l'accès aux données de sécurité enregistrées dans la carte à puce d'abonné 20 peut être réalisé en accédant à distance, via le réseau de télécommunication, à un fichier spécifique présent sur la mémoire 23 de la carte et paramétrable suivant deux statuts, à savoir un statut débloqué permettant au composant de sécurité 32 d'accéder aux données de sécurité enregistrées dans la mémoire 23 de la carte et un statut bloqué empêchant un tel accès. Le statut du fichier peut être paramétré à distance en mettant à jour le fichier par envoi d'un message SMS comprenant le nouveau statut à enregistrer. Dans ce cas, les moyens de traitement 22 sont programmés pour consulter préalablement le statut du fichier (bloqué ou débloqué) lors de la réception d'une requête d'authentification émise par le composant de sécurité du module de communication de proximité. Suivant le statut du fichier, les moyens de traitement 22 pourront ou ne pourront pas répondre à la requête d'authentification.

Lorsque l'on souhaite bloquer en même temps l'accès au réseau de télécommunication (par exemple en cas de perte ou vol du terminal), le blocage de l'accès aux données de sécurité enregistrées dans la carte à puce d'abonné 20 (mise à jour du fichier statut) doit être réalisé en premier.

Par conséquent, dans la présente invention, le blocage de l'accès aux données de sécurité enregistrées dans la carte à puce d'abonné permet d'empêcher toute utilisation du module de communication de proximité NFC qui nécessite une authentification de la carte à puce d'abonné.

Conformément à l'invention, toute authentification nécessaire par le composant de sécurité du module de communication de proximité NFC est réalisée en fonction de données de sécurité enregistrées sur la carte à puce d'abonné du téléphone mobile. La nature des données de sécurité enregistrées sur la carte à puce d'abonné dépend du type et du niveau d'authentification requis par le composant de sécurité. Ces données peuvent par exemple correspondre à un ou plusieurs codes confidentiels éventuellement stockés sous forme cryptée dans la carte à puce d'abonné, à une ou plusieurs clés secrètes associées à des algorithmes de cryptographie correspondants ou à des algorithmes de résolution de challenge, etc.

L'opération d'authentification initiée par le composant de sécurité peut avoir différentes origines. Elle peut être notamment demandée lorsque l'utilisateur souhaite accéder sur son téléphone mobile (affichage sur l'écran) à des données enregistrées dans le composant de sécurité (comme par exemple pour consulter le solde d'un compte de paiement électronique ou activer/désactiver une fonction particulière dans le module (par exemple accès automatique à un lieu)). Elle peut en outre être mise en œuvre lors de la validation d'un paiement électronique ou d'un accès à un lieu au moyen du module de communication de proximité NFC.

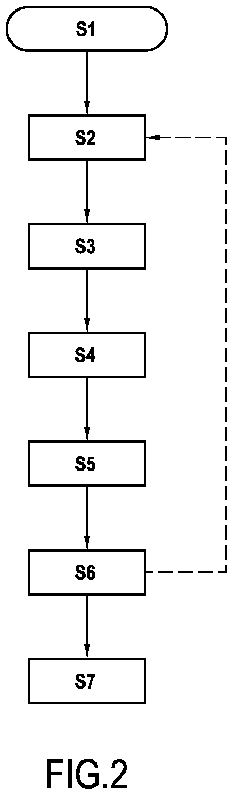

La figure 2 illustre les étapes réalisées lors d'une opération d'authentification conformément à un mode de réalisation de l'invention. L'exemple de mise en œuvre du procédé décrit en relation avec la figure 2 comprend bien entendu, conformément à l'invention, une étape préalable d'enregistrement sur la carte à puce d'abonné de données de sécurité nécessaires lors d'une authentification de la carte à puce d'abonné par le composant de sécurité du module de communication de proximité. Ces mêmes données de sécurité ou des données correspondantes sont également enregistrées dans la mémoire du composant de sécurité du module de communication de proximité NFC.

La première étape (étape S1) correspond à un évènement initiateur d'une demande d'authentification par le composant de sécurité 32 du module de communication de proximité NFC 30. Cet évènement peut correspondre, par exemple, à la réception par le module de communication de proximité NFC d'une demande de validation de paiement électronique émanant d'un terminal de paiement équipé d'un lecteur NFC ou d'une demande d'autorisation d'accès émanant d'un dispositif d'ouverture automatique (porte barrière) équipé d'un lecteur NFC. L'évènement peut être également un évènement interne au téléphone mobile, c'est-à-dire sans utilisation des fonctions de communication très courtes distances du module de communication de proximité NFC, comme par exemple lorsque l'utilisateur souhaite visualiser ou modifier des données stockées dans la mémoire 321 du composant de sécurité 32 qui ne sont pas libres d'accès.

Lorsqu'une authentification est nécessaire, le composant de sécurité 32 envoie au système d'exploitation 12 du téléphone mobile 10 une requête d'authentification (étape S2). Le contenu de cette requête dépend du type et du niveau d'authentification utilisés par le composant de sécurité à ce moment. La requête peut correspondre simplement à demander un code confidentiel (authentification simple) ou exiger une signature électronique (par exemple signature/réalisation d'un défi encore appelé "challenge").

La requête d'authentification reçue par le système d'exploitation 12 du téléphone mobile 10 est transmise à la carte à puce d'abonné 20 (étape S3). Les moyens de traitement 22 de la carte à puce d'abonné traitent alors la requête (étape S4) et renvoient, au système d'exploitation 12, une réponse à cette requête (étape S5) établie avec des données de sécurité enregistrées dans la mémoire de la carte à puce d'abonné. Le système d'exploitation 12 transmet la réponse fournie par la carte à puce d'abonné 20 au composant de sécurité 32 du module de communication de proximité NFC 30 (étape S6). Les moyens de traitement 320 du composant de sécurité 32 vérifient alors la validité de la réponse et, par conséquent, celle de l'authentification (étape S7). Ainsi, les moyens de traitement 320 du composant de sécurité 32 permettent d'authentifier la carte à puce d'abonné.

Dans le cas d'une opération d'authentification simple, l'étape S2 correspond à l'envoi par le composant de sécurité 32 d'une demande de code confidentiel. Dans l'étape S3, le système d'exploitation 12 transmet cette requête à la carte puce d'abonné 20. Dans l'étape S4, les moyens de traitement 22 de la carte à puce d'abonné interrogent la mémoire de la carte pour lire le code confidentiel correspondant qu'ils renvoient au système d'exploitation 12 lors de l'étape S5. Le système d'exploitation transmet ce code au composant de sécurité lors de l'étape S6. Dans l'étape S7, les moyens de traitement 320 du composant de sécurité 32 comparent le code confidentiel extrait de la carte à puce d'abonné avec un code de référence enregistré dans la mémoire 321 du composant de sécurité. Si le code reçu est identique au code de référence, l'authentification de la carte à puce d'abonné par le composant de sécurité est réussie. Dans cet exemple, les données de sécurité correspondent simplement à un ou plusieurs codes confidentiels stockés dans la mémoire de la carte à puce d'abonné.

Dans le cas d'une opération d'authentification forte, par exemple mettant en œuvre la signature/réalisation d'un challenge, l'étape S2 correspond à l'envoi par le composant de sécurité 32 d'une requête comprenant un message M à crypter. Dans l'étape S3, le système d'exploitation 12 transmet cette requête à la carte puce d'abonné 20. Dans l'étape S4, les moyens de traitement 22 de la carte à puce d'abonné cryptent le message M par une fonction de cryptographie f et une clé k enregistrées dans la mémoire 23 de la carte d'abonné 20 pour former un message crypté ou signature M'=f(M) (génération d'empreinte). Les moyens de traitement 22 de la carte à puce d'abonné 20 envoient le message crypté M' au système d'exploitation 12 lors de l'étape S5. Le système d'exploitation transmet M' au composant de sécurité 32. Dans l'étape S7, les moyens de traitement 320 du composant de sécurité vérifient s'ils sont en mesure de décrypter M' en utilisant leur clé. Si tel est le cas, le composant de sécurité est assuré que la carte à puce d'abonné possède bien la clé secrète k et que l'authentification de la carte à puce d'abonné par le module de communication est réussie.

Dans cet exemple, les données de sécurité enregistrées et utilisées dans la carte à puce d'abonné correspondent à des données de cryptographie qui comprennent non seulement des données de secrets (clés) mais aussi des algorithmes de calculs cryptographiques permettant de réaliser des calculs sur les challenges envoyés par le composant de sécurité.

Les mécanismes d'authentification utilisant ou non des clés de cryptographie sont bien connus et ne seront pas décrits plus en détail pour ne pas alourdir inutilement la description de la présente invention. A titre d'exemple, on peut citer les mécanismes d'authentification utilisant des algorithmes connus tels que les algorithmes RSA, DES ou triple DES.

L'authentification de la carte à puce d'abonné par le composant de sécurité du module de communication de proximité peut être demandée au début d'une session d'échanges d'informations avec le composant de sécurité ou systématiquement lors de chaque échange d'informations avec le composant de sécurité.

En outre, afin d'augmenter le niveau de sécurité dans le composant de sécurité du module de communication de proximité, les moyens de traitement du composant de sécurité peuvent être spécifiquement programmés pour interdire l'accès aux données du composant de sécurité en cas de tentative(s) d'authentification infructueuse(s).

## Revendications

1. Procédé de sécurisation, mis en œuvre par un dispositif de sécurité (20) compris dans un terminal (10) et apte à être bloqué à distance, pour sécuriser l'accès à un module de communication de proximité (30) comprenant un composant de sécurité (32) relié à des moyens de communication sans fil (33, 34), ledit module de communication de proximité (30) étant embarqué sur ledit terminal (10), ledit procédé comprend :
une étape d'enregistrement de données de sécurité relatives au module de communication de proximité dans le dispositif de sécurité (20) ;
une étape d'authentification dudit dispositif de sécurité (20) auprès du composant de sécurité (32) du module de communication de proximité (30) en fonction desdites données de sécurité enregistrées dans le dispositif de sécurité (20), ladite étape d'authentification comprenant une transmission desdites données de sécurité ou de données calculées à partir desdites données de sécurité en réponse à une requête d'authentification du composant de sécurité (32) du module de communication de proximité (30) ; et
une étape de blocage à distance de l'accès auxdites données de sécurité pour empêcher toute utilisation du module de communication de proximité (30) nécessitant une authentification du dispositif de sécurité (20).

2. Procédé selon la revendication 1 dans lequel, lors de l'étape d'enregistrement des données de sécurité dans le dispositif de sécurité (20), au moins un code confidentiel est enregistré dans ledit dispositif de sécurité.

3. Procédé selon la revendication 2, dans lequel le dispositif de sécurité (20) protège chaque code confidentiel lors de son enregistrement.

4. Procédé selon la revendication 2 ou 3, dans lequel le terminal comprend un système d'exploitation (12) destiné à permettre une communication entre le dispositif de sécurité (20) et le composant de sécurité du module de communication de proximité (30), et en ce que, lors de l'étape d'authentification, le système d'exploitation (12) transmet au composant de sécurité (32) du module de communication de proximité (30) au moins un code confidentiel enregistré dans le dispositif de sécurité (20), chaque code confidentiel transmis étant comparé avec un code préenregistré dans le composant de sécurité (32) du module de communication de proximité (30).

5. Procédé selon l'une quelconque des revendication 1 à 4 dans lequel, lors de l'étape d'enregistrement des données de sécurité dans le dispositif de sécurité (20), au moins une clé de cryptographie est enregistrée dans ledit dispositif de sécurité.

6. Procédé selon la revendication 5, dans lequel le terminal (10) comprend un système d'exploitation (12) destiné à permettre une communication entre le dispositif de sécurité (20) et le composant de sécurité (32) du module de communication de proximité (30), et en ce que, lors de l'étape d'authentification, le dispositif de sécurité (20) réalise une signature électronique au moyen de la clé de cryptographie en réponse à une requête d'authentification émise par le composant de sécurité (32) du module de communication de proximité (30) et transmise par le système d'exploitation (12), ladite signature étant retournée par le système d'exploitation audit composant de sécurité pour vérification.

7. Procédé selon l'une quelconque des revendications 1 à 6, dans lequel les moyens de communication sans fil (33, 34) sont de de type NFC.

8. Dispositif de sécurité (20) apte à être bloqué à distance et destiné à être embarqué dans un terminal (10), ledit terminal étant équipé d'un module de communication de proximité (30) comprenant un composant de sécurité (32) relié à des moyens de communication sans fil (33, 34), ledit dispositif comprenant :
des moyens (23) pour mémoriser des données de sécurité relatives au module de communication de proximité ;
des moyens (22) pour transmettre lesdites données de sécurité ou des données calculées à partir desdites données de sécurité en réponse à une requête d'authentification du composant de sécurité (32) du module de communication de proximité (30),
des moyens pour bloquer à distance l'accès auxdites données de sécurité pour empêcher toute utilisation du module de communication de proximité nécessitant une authentification du dispositif de sécurité (20).

9. Dispositif de sécurité selon la revendication 8, dans lequel les données de sécurité comprennent au moins un code confidentiel et/ou au moins une clé de cryptographie.

10. Dispositif selon la revendication 7 ou 8, dans lequel les moyens de communication sans fil (33, 34) sont de de type NFC.

11. Programme d'ordinateur destiné à être exécuté par des moyens de traitement (22) d'un dispositif de sécurité (20) apte à être bloqué à distance et destiné à être embarqué dans un terminal (10), ledit terminal étant équipé d'un module de communication de proximité (30) comprenant un composant de sécurité (32) relié à des moyens de communication sans fil (33, 34), lequel comprend des instructions pour :
mémoriser des données de sécurité relatives au module de communication de proximité ;
pour authentifier ledit dispositif de sécurité (20) auprès du composant de sécurité (32) du module de communication de proximité (30) en fonction desdites données de sécurité enregistrées dans le dispositif de sécurité (20), en transmettant lesdites données de sécurité ou des données calculées à partir desdites données de sécurité en réponse à une requête d'authentification du composant de sécurité (32) du module de communication de proximité (30) ; et
pour bloquer à distance l'accès auxdites données de sécurité pour empêcher toute utilisation du module de communication de proximité (30) nécessitant une authentification du dispositif de sécurité (20).

12. Terminal (10) comprenant un dispositif de sécurité (20) selon l'une quelconque des revendications 8 à 10 et un module de communication de proximité (30), comprenant un composant de sécurité (32) relié à des moyens de communication sans fil (33, 34), destiné à être embarqué dans un terminal mobile (10) comprenant un dispositif de sécurité (20) sur lequel sont enregistrées des données de sécurité, et des moyens de traitement (320) pour authentifier le dispositif de sécurité (20) en fonction des données de sécurité enregistrées dans le dispositif de sécurité.

## Patentansprüche

1. Absicherungsverfahren, das durch eine Sicherheitsvorichtung (20) umgesetzt wird, die in einem Endgerät (10) enthalten ist und geeignet ist, ferngesperrt zu werden, um den Zugriff auf ein Proximitätskommunikationsmodul (30) abzusichern, das eine Sicherheitskomponente (32) umfasst, die mit drahtlosen Kommunikationsmitteln (33, 34) verbunden ist, wobei das Proximitätskommunikationsmodul (30) auf dem Endgerät (10) enthalten ist,
das Verfahren umfasst:
einen Schritt des Speicherns von Sicherheitsdaten bezogen auf das Proximitätskommunikationsmodul in der Sicherheitsvorrichtung (20);
einen Schritt des Authentifizierens der Sicherheitsvorrichtung (20) bei der Sicherheitskomponente (32) des Proximitätskommunikationsmoduls (30) in Abhängigkeit von den Sicherheitsdaten, die in der Sicherheitsvorrichtung (20) gespeichert sind, der Schritt des Authentifizierens umfassend eine Übertragung der Sicherheitsdaten oder von Daten, die anhand der Sicherheitsdaten berechnet wurden, in Reaktion auf eine Authentifizierungsanforderung der Sicherheitskomponente (32) des Proximitätskommunikationsmoduls (30); und
einen Schritt des Fernsperrens des Zugriffs auf die Sicherheitsdaten, um jegliche Nutzung des Proximitätskommunikationsmoduls (30) zu verhindern, die eine Authentifizierung der Sicherheitsvorrichtung (20) erfordert.

2. Verfahren nach Anspruch 1, wobei, beim Schritt des Speicherns der Sicherheitsdaten in der Sicherheitsvorrichtung (20), mindestens ein vertraulicher Code in der Sicherheitsvorrichtung gespeichert wird.

3. Verfahren nach Anspruch 2, wobei die Sicherheitsvorrichtung (20) jeden vertraulichen Code bei dessen Speicherung schützt.

4. Verfahren nach Anspruch 2 oder 3, wobei das Endgerät ein Betriebssystem (12) umfasst, das dazu bestimmt ist, eine Kommunikation zwischen der Sicherheitsvorrichtung (20) und der Sicherheitskomponente des Proximitätskommunikationsmoduls (30) zu gestatten, und dadurch, dass beim Schritt des Authentifizierens das Betriebssystem (12) an die Sicherheitskomponente (32) des Proximitätskommunikationsmoduls (30) mindestens einen vertraulichen Code überträgt, der in der Sicherheitsvorrichtung (20) gespeichert ist, wobei jeder übertragene vertrauliche Code mit einem Code verglichen wird, der vorab in der Sicherheitskomponente (32) des Proximitätskommunikationsmoduls (30) gespeichert wurde.

5. Verfahren nach einem der Ansprüche 1 bis 4, wobei, beim Schritt des Speicherns der Sicherheitsdaten in der Sicherheitsvorrichtung (20), mindestens ein Kryptographieschlüssel in der Sicherheitsvorrichtung gespeichert wird.

6. Verfahren nach Anspruch 5, wobei das Endgerät (10) ein Betriebssystem (12) umfasst, das dazu bestimmt ist, eine Kommunikation zwischen der Sicherheitsvorrichtung (20) und der Sicherheitskomponente (32) des Proximitätskommunikationsmoduls (30) zu gestatten, und dadurch, dass beim Schritt des Authentifizierens die Sicherheitsvorrichtung (20) eine elektronische Signatur mittels des Kryptographieschlüssels in Reaktion auf eine Authentifizierungsanforderung realisiert, die von der Sicherheitskomponente (32) des Proximitätskommunikationsmoduls (30) gesendet wird und durch das Betriebssystem (12) übertragen wird, wobei die Signatur durch das Betriebssystem an die Sicherheitskomponente zur Überprüfung zurückgegeben wird.

7. Verfahren nach einem der Ansprüche 1 bis 6, wobei die drahtlosen Kommunikationsmittel (33, 34) vom NFC-Typ sind.

8. Sicherheitsvorichtung (20), die geeignet ist, ferngesperrt zu werden und dazu bestimmt ist, in einem Endgerät (10) enthalten zu sein, wobei das Endgerät mit einem Proximitätskommunikationsmodul (30) ausgerüstet ist, das eine Sicherheitskomponente (32) umfasst, die mit drahtlosen Kommunikationsmitteln (33, 34) verbunden ist, die Vorrichtung umfassend:
Mittel (23) zum Abspeichern der Sicherheitsdaten bezogen auf das Proximitätskommunikationsmodul;
Mittel (22), um die Sicherheitsdaten oder Daten, die anhand der Sicherheitsdaten berechnet wurden, in Reaktion auf eine Authentifizierungsanforderung der Sicherheitskomponente (32) des Proximitätskommunikationsmoduls (30) zu übertragen,
Mittel zum Fernsperren des Zugriffs auf die Sicherheitsdaten, um jegliche Nutzung des Proximitätskommunikationsmoduls zu verhindern, die eine Authentifizierung der Sicherheitsvorrichtung (20) erfordert.

9. Sicherheitsvorrichtung nach Anspruch 8, wobei die Sicherheitsdaten mindestens einen vertraulichen Code und/oder mindestens einen Kryptographieschlüssel umfassen.

10. Vorrichtung nach Anspruch 7 oder 8, wobei die drahtlosen Kommunikationsmittel (33, 34) vom NFC-Typ sind.

11. Computerprogramm, das dazu bestimmt ist, durch Verarbeitungsmittel (22) einer Sicherheitsvorrichtung (20) ausgeführt zu werden, die geeignet ist, ferngesperrt zu werden und dazu bestimmt ist, in einem Endgerät (10) enthalten zu sein, wobei das Endgerät mit einem Proximitätskommunikationsmodul (30) ausgerüstet ist, das eine Sicherheitskomponente (32) umfasst, die mit drahtlosen Kommunikationsmitteln (33, 34) verbunden ist,
welches Anweisungen umfasst, um:
Sicherheitsdaten bezogen auf das Proximitätskommunikationsmodul abzuspeichern;
die Sicherheitsvorrichtung (20) bei der Sicherheitskomponente (32) des Proximitätskommunikationsmoduls (30) in Abhängigkeit von den Sicherheitsdaten zu authentifizieren, die in der Sicherheitsvorrichtung (20) gespeichert sind, indem die Sicherheitsdaten oder Daten, die anhand der Sicherheitsdaten berechnet wurden, in Reaktion auf eine Authentifizierungsanforderung der Sicherheitskomponente (32) des Proximitätskommunikationsmoduls (30) übertragen werden; und
um den Zugriff auf die Sicherheitsdaten fernzusperren, um jegliche Nutzung des Proximitätskommunikationsmoduls (30) zu verhindern, die eine Authentifizierung der Sicherheitsvorrichtung (20) erfordert.

12. Endgerät (10), umfassend eine Sicherheitsvorrichtung (20) nach einem der Ansprüche 8 bis 10 und ein Proximitätskommunikationsmodul (30), umfassend eine Sicherheitskomponente (32), die mit drahtlosen Kommunikationsmitteln (33, 34) verbunden ist, die dazu bestimmt ist, in einem mobilen Endgerät (10) enthalten zu sein, das eine Sicherheitsvorrichtung (20), auf der Sicherheitsdaten gespeichert sind, und Verarbeitungsmittel (320), um die Sicherheitsvorrichtung (20) in Abhängigkeit von den Sicherheitsdaten zu authentifizieren, die in der Sicherheitsvorrichtung gespeichert sind, umfasst.

## Claims

1. Security method, implemented by a security device (20) contained in a terminal (10) and able to be blocked remotely, for securing access to a proximity communication module (30) comprising a security component (32) linked to wireless communication means (33, 34), said proximity communication module (30) being embedded in said terminal (10), said method comprising
a step of recording security data relating to the proximity communication module in the security device (20) ;
a step of authenticating said security device (20) with the security component (32) of the proximity communication module (30) on the basis of said security data recorded in the security device (20), said authentication step comprising transmitting said security data or data calculated from said security data in response to an authentication request from the security component (32) of the proximity communication module (30); and
a step of remotely blocking access to said security data in order to prevent any use of the proximity communication module (30) requiring authentication of the security device (20).

2. Method according to Claim 1, wherein, in the step of recording the security data in the security device (20), at least one confidential code is recorded in said security device.

3. Method according to Claim 2, wherein the security device (20) protects each confidential code when it is recorded.

4. Method according to Claim 2 or 3, wherein the terminal comprises an operating system (12) intended to allow communication between the security device (20) and the security component of the proximity communication module (30), and in that, in the authentication step, the operating system (12) transmits at least one confidential code recorded in the security device (20) to the security component (32) of the proximity communication module (30), each transmitted confidential code being compared with a code pre-recorded in the security component (32) of the proximity communication module (30).

5. Method according to any one of Claims 1 to 4, wherein, in the step of recording the security data in the security device (20), at least one cryptographic key is recorded in said security device.

6. Method according to Claim 5, wherein the terminal (10) comprises an operating system (12) intended to allow communication between the security device (20) and the security component (32) of the proximity communication module (30), and in that, in the authentication step, the security device (20) performs an electronic signature by way of the cryptographic key in response to an authentication request issued by the security component (32) of the proximity communication module (30) and transmitted by the operating system (12), said signature being returned to said security component by the operating system for verification.

7. Method according to any one of Claims 1 to 6, wherein the wireless communication means (33, 34) are of NFC type.

8. Security device (20) able to be blocked remotely and intended to be embedded in a terminal (10), said terminal being equipped with a proximity communication module (30) comprising a security component (32) linked to wireless communication means (33, 34), said device comprising:
means (23) for recording security data relating to the proximity communication module;
means (22) for transmitting said security data or data calculated from said security data in response to an authentication request from the security component (32) of the proximity communication module (30),
means for remotely blocking access to said security data in order to prevent any use of the proximity communication module requiring authentication of the security device (20).

9. Security device according to Claim 8, wherein the security data comprise at least one confidential code and/or at least one cryptographic key.

10. Device according to Claim 7 or 8, wherein the wireless communication means (33, 34) are of NFC type.

11. Computer program intended to be executed by processing means (22) of a security device (20) able to be blocked remotely and intended to be embedded in a terminal (10), said terminal being equipped with a proximity communication module (30) comprising a security component (32) linked to wireless communication means (33, 34), which program comprises instructions for:
storing security data relating to the proximity communication module;
for authenticating said security module (20) with the security component (32) of the proximity communication module (30) on the basis of said security data recorded in the security device (20), by transmitting said security data or data calculated from said security data in response to an authentication request from the security component (32) of the proximity communication module (30); and
for remotely blocking access to said security data in order to prevent any use of the proximity communication module (30) requiring authentication of the security device (20).

12. Terminal (10) comprising a security device (20) according to any one of Claims 8 to 10 and a proximity communication module (30), comprising a security component (32) linked to wireless communication means (33, 34), intended to be embedded in a mobile terminal (10) comprising a security device (20) in which security data are recorded, and processing means (320) for authenticating the security device (20) on the basis of the security data recorded in the security device.
